# FASCICULE DE BREVET EUROPEEN

(11) **EP 2 015 609 B1**
(45) Date de publication et mention de la délivrance du brevet: **19.11.2014**
(21) Numéro de dépôt: 08290687.6
(22) Date de dépôt: 11.07.2008
(51) Int. Cl.: H05B 3/50, F24H 3/00, B23K 11/14

(54) **Corps de chauffe pour appareil de chauffage, procédé de réalisation du corps de chauffe, et appareil de chauffage de locaux incorporant un tel corps de chauffe**
Heizkörper für Heizgerät, Herstellungsverfahren des Heizkörpers und Heizgerät für Räume, das mit einem solchen Heizkörper ausgestattet ist
Heating element for a heating appliance, method of manufacturing the heating element and radiation heating appliance comprising such a heating element

(30) Priorité: 12.07.2007 FR 0705072
(43) Date de publication de la demande: 14.01.2009
(73) Titulaire: Atlantic Industrie, 85000 La Roche sur Yon (FR)
(72) Inventeur: Aminot, Vincent, 85000 Mouilleron Le Captif (FR)
(74) Mandataire: Le Cloirec, Claudine

(56) Documents cités:
- EP-A- 0 102 927
- DE-A1- 3 938 895
- FR-A- 1 465 590
- FR-A- 2 301 780
- FR-A- 2 631 427
- FR-A- 2 730 120
- US-A- 3 117 249
- US-A- 3 193 659

## Description

La présente invention concerne le domaine des appareils de chauffage électrique de locaux, et plus particulièrement les appareils à corps de chauffe incluant une résistance électrique.

Dans les appareils de chauffage électrique classiques, notamment dans les panneaux rayonnants, le chauffage est assuré par un corps de chauffe formé d'une ou plusieurs résistance(s) électrique(s) associée(s) à un ou plusieurs diffuseur(s) incorporé(s) dans une enveloppe généralement métallique, et disposé à proximité de la paroi frontale interne de ladite enveloppe.

La plupart des corps de chauffe actuels sont réalisés en utilisant en tant que diffuseur thermique des profilés en aluminium extrudé. Ces profilés intègrent, dans des logements longitudinaux de forme tubulaire, des résistances chauffantes électriques disposées selon l'axe longitudinal de ces logements et constituées d'un fil métallique bobiné, noyé dans des grains de magnésie compactés. La magnésie, conducteur thermique et bon isolant diélectrique, assure ainsi sans danger le transfert de chaleur du fil métallique vers le diffuseur.

D'autres corps de chauffe utilisent en tant que diffuseur des plaques de mica, un matériau à base de silicate. Deux plaques de mica sont collées l'une à l'autre et prennent en sandwich une résistance électrique chauffante constituée d'une feuille métallique reliée à l'alimentation électrique.

Ces corps de chauffe fonctionnent de manière satisfaisante mais sont d'un coût relativement élevé de par leur structure nécessitant l'incorporation, lors de la fabrication, des fils ou feuilles métalliques chauffants à l'intérieur des logements ménagés dans les diffuseurs. De plus, lesdits logements doivent être de forme simple pour une fabrication et un montage aisé, imposant généralement une forme rectiligne.

Lorsque l'on souhaite augmenter la puissance de chauffe, il est alors nécessaire d'introduire une multiplicité de résistances rectilignes, reliées en parallèles à l'alimentation électrique, et en conséquence d'aménager une multiplicité de logements dans un même diffuseur, ou la multiplication des diffuseurs dans un même appareil.

On connaît de FR 2.931.427 des corps de chauffe, pour radiateur électrique, formés d'un assemblage de résistances électriques tubulaires logées dans des rainures d'une plaque formant diffuseur, et soudées à ce dernier par apport de matière, par exemple un fil de cuivre ou une patte de cuivre.

La présente invention a donc pour but de proposer un nouveau type de corps de chauffe pour appareils de chauffage à structure simplifiée et à fabrication à coûts réduits, sans réduction des performances thermiques.

A cet effet, la présente invention propose un corps de chauffe pour appareil de chauffage électrique de locaux, du type comportant au moins une résistance électrique chauffante constituée d'une gaine métallique, incorporant un fil métallique bobiné, noyé dans un isolant diélectrique, la résistance électrique étant fixée par soudure de la gaine métallique sur la surface d'au moins une des faces d'un diffuseur métallique se présentant sensiblement sous la forme d'une plaque, caractérisé en ce que le diffuseur et la gaine de la résistance chauffante sont en acier et sont soudés l'un à l'autre par fusion mutuelle des métaux les constituant au niveau de la zone de soudure, sans ajout de métal supplémentaire, la surface du diffuseur présentant, avant soudure, des bossages, la gaine de la résistance électrique étant soudée au diffuseur exclusivement au niveau desdits bossages.

Le diffuseur peut donc être de forme très simple, puisqu'il peut se présenter sous la forme d'une plaque unique. Ainsi, la résistance électrique n'a pas à s'adapter à une configuration particulière d'un logement ni inversement, il n'est pas nécessaire de ménager un logement pour la résistance au sein du diffuseur. Cette résistance peut donc être de forme quelconque.

La résistance électrique est donc fixée à l'extérieur du diffuseur et non incorporée à l'intérieur de ce dernier. En conséquence, la réalisation du corps de chauffe est considérablement simplifiée puisqu'elle consiste essentiellement à fixer par soudure sans ajout de métal supplémentaire, la résistance électrique à une face extérieure du diffuseur.

La résistance électrique est constituée d'une gaine métallique en acier, généralement tubulaire dans laquelle est incorporé un fil métallique bobiné noyé par exemple dans des grains de magnésie compactés.

Afin de permettre un contact intime de la résistance électrique avec le diffuseur, et notamment une continuité métallique de l'assemblage entre ces deux éléments, la soudure est réalisée à température élevée, par fusion mutuelle des métaux constituant le diffuseur et la gaine de la résistance électrique, au niveau de la zone de soudure.

Cette fusion mutuelle des métaux constituant le diffuseur et la gaine de la résistance électrique est favorisée par le fait que ces derniers sont de même nature à savoir en acier, avantageusement de composition sensiblement identique. L'acier est en outre un métal meilleur marché que l'aluminium.

Selon l'invention, les bossages sont présents à la surface du diffuseur et non, comme mentionné dans le brevet US 3,193,659, sur l'élément tubulaire à souder, qui, de plus, ne correspond pas, dans ce document, à une gaine de résistance électrique.

Il est en outre préféré que le corps de chauffe comporte une résistance électrique chauffante unique, afin de limiter le nombre de connexions à l'alimentation électrique. En ce qui concerne la configuration générale de ladite résistance électrique chauffante, elle peut alors être formée d'un seul tronçon rectiligne, ou de plusieurs tronçons rectilignes reliés par au moins un tronçon courbe. La résistance serpente ainsi au contact direct de la surface d'au moins une face latérale du diffuseur, de manière à transmettre et à répartir, par conduction, ses calories à l'ensemble du diffuseur.

Le diffuseur peut être une plaque métallique de forme générale plane. Il peut également être une plaque métallique ondulée présentant des ondulations sensiblement perpendiculaires au(x) tronçon(s) rectiligne(s) de la résistance électrique.

De préférence, les ondulations sont situées entre les zones de soudure. Ces ondulations servent de "soufflets" de dilatation de la plaque entre les zones de soudures de la gaine de la résistance électrique.

Dans le cas où les ondulations sont uniformément réparties, les régions en saillie (renflements) vis-à-vis de la résistance électrique peuvent constituer des zones de soudure (correspondant aux bossages précités), les régions en creux s'éloignant de la résistance électrique servant de zones de dilatations éventuelles.

En variante, des ondulations éventuelles parallèles aux tronçons rectilignes de la résistance peuvent constituer des logements partiels pour cesdits tronçons en vue d'augmenter le contact périphérique de la résistance avec la surface du diffuseur, et éventuellement accroître la zone de soudure possible.

Selon un mode préféré de réalisation, le diffuseur est muni d'au moins un logement externe qui épouse au moins partiellement la forme de la résistance électrique chauffante, de manière à favoriser le transfert thermique.

La plaque métallique constituant le diffuseur peut être d'épaisseur réduite, comprise avantageusement entre 0,5 mm et 1 mm environ, permettant la réalisation d'un corps de chauffe relativement économique.

La présente invention concerne également un procédé de réalisation d'un corps de chauffe pour appareil de chauffage électrique, tel que décrit ci-dessus par soudure d'une résistance électrique chauffante sur un diffuseur, caractérisé en ce qu'il comprend les étapes successives suivantes :
- réalisation de bossages à la surface d'au moins une face du diffuseur,
- mise en place de la résistance électrique chauffante au contact du diffuseur uniquement au niveau des bossages,
- positionnement d'au moins une paire d'électrodes de soudure de part et d'autre de l'ensemble constitué par le diffuseur et la résistance électrique chauffante,
- application d'une tension électrique entre les deux électrodes, et d'une pression dans le sens d'un rapprochement des électrodes induisant un écrasement des bossages lors de la fusion mutuelle des métaux constitutifs du diffuseur et de la gaine de la résistance électrique.

Ainsi, si le diffuseur est de forme sensiblement plane, la gaine de la résistance électrique arrive en contact linéique avec la surface de la face correspondante du diffuseur.

Les bossages sont des déformations limitées du diffuseur réalisées par exemple au moyen d'un outil d'emboutissage. Ces bossages sont de préférence de forme oblongue orientée perpendiculairement à l'axe du tronçon correspondant de la résistance électrique (permettant une tolérance de positionnement de cette dernière) et présentent de préférence une surface supérieure arrondie. Cette surface arrondie permet de réduire au minimum la zone de contact entre la gaine de la résistance électrique et le bossage proprement dit, de manière à "concentrer" le passage du courant de soudure dans cette zone.

Un tel procédé permet en particulier, avec des électrodes de plus grande longueur de réaliser simultanément plusieurs soudures au niveau de plusieurs bossages, et de réduire ainsi les cycles de fabrication du corps de chauffe.

La présente invention concerne également un appareil de chauffage électrique de locaux, caractérisé en ce qu'il comprend une enveloppe (ou caisson) incorporant un corps de chauffe selon l'invention, le diffuseur étant disposé à proximité de la paroi frontale interne de ladite enveloppe et la face du diffuseur opposée à celle recevant la résistance électrique par soudure étant orientée en direction de ladite paroi frontale de l'enveloppe.

Cet appareil de chauffage peut être un convecteur, un panneau rayonnant, un radiateur ou un sèche-serviettes. Dans le cas où l'appareil de chauffage constitue un panneau rayonnant, la face du diffuseur orientée vers la paroi frontale de l'enveloppe est recouverte d'un revêtement, de type peinture, augmentant l'émissivité de la surface de rayonnement dudit diffuseur.

D'autres aspects et avantages de l'invention ressortiront de la description ci-après d'exemples de réalisation, non limitatifs, en référence aux planches de dessins annexées, dans lesquelles :
la figure 1 est une vue arrière d'un corps de chauffe, suivant l'invention, pour panneau rayonnant ;
la figure 2 est une coupe transversale selon AA de la figure 1 ;
les figures 3 et 4 sont des coupes partielles présentant deux variantes de fixation de la résistance chauffante sur le diffuseur du corps de chauffe, selon l'invention ;
la figure 5 est une coupe horizontale d'un diffuseur sous forme d'une plaque ondulée ;
la figure 6 est une représentation schématique en coupe verticale d'un corps de chauffe incorporé dans un panneau rayonnant ;
les figures 7 et 8 présentent les résultats de tests thermiques respectivement pour un corps de chauffe selon l'art antérieur (figure 7) et la présente invention (figure 8), sous forme d'isothermes de la face frontale du diffuseur.
Les figures 9A, 9B, 10A et 10B sont des représentations schématiques illustrant le procédé de mise en oeuvre de l'invention : les figures 9A et 9B avant soudure, les figures 10A et 10B après soudure, les figures 9A et 10A étant des vues de côté et les figures 9B et 10B des vues en coupe transversale.

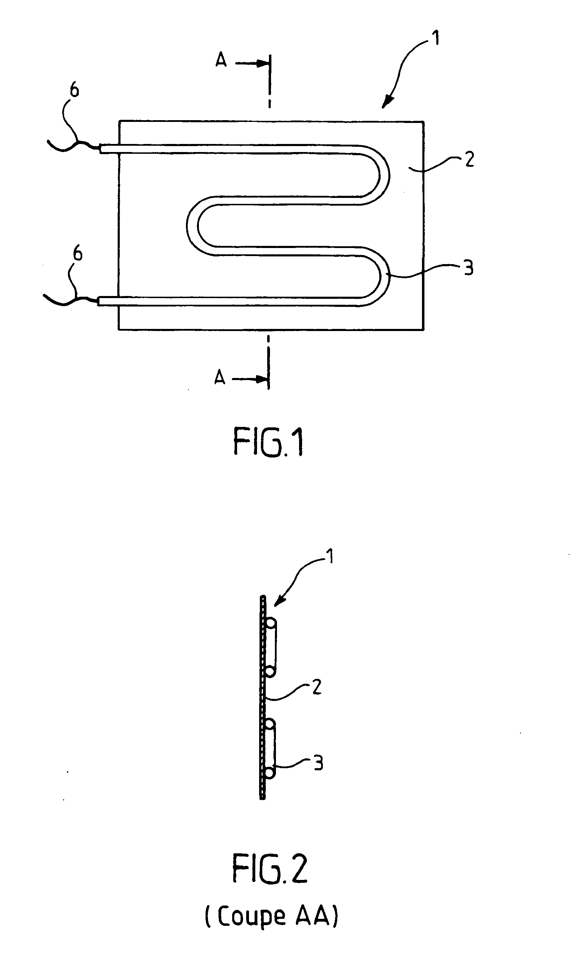

Le corps de chauffe 1 conforme à l'invention représenté sur la figure 1 est constitué d'une résistance chauffante 3, soudée sur le diffuseur 2 se présentant sous la forme d'une plaque plane. La résistance chauffante 3 comporte des tronçons rectilignes reliés par des tronçons courbes. Une telle forme permet de mettre en oeuvre une seule résistance chauffante 3, avec seulement deux connexions à l'alimentation électrique, à chacune de ses extrémités.

Il est possible également, comme dans l'art antérieur (corps de chauffe constitué de profilés en aluminium extrudés), de prévoir un corps de chauffe pourvu de plusieurs résistances électriques chauffantes, disposées avantageusement parallèlement les unes aux autres. Dans ce cas, il est nécessaire de prévoir des connexions 6 à l'alimentation électrique pour chaque résistance chauffante.

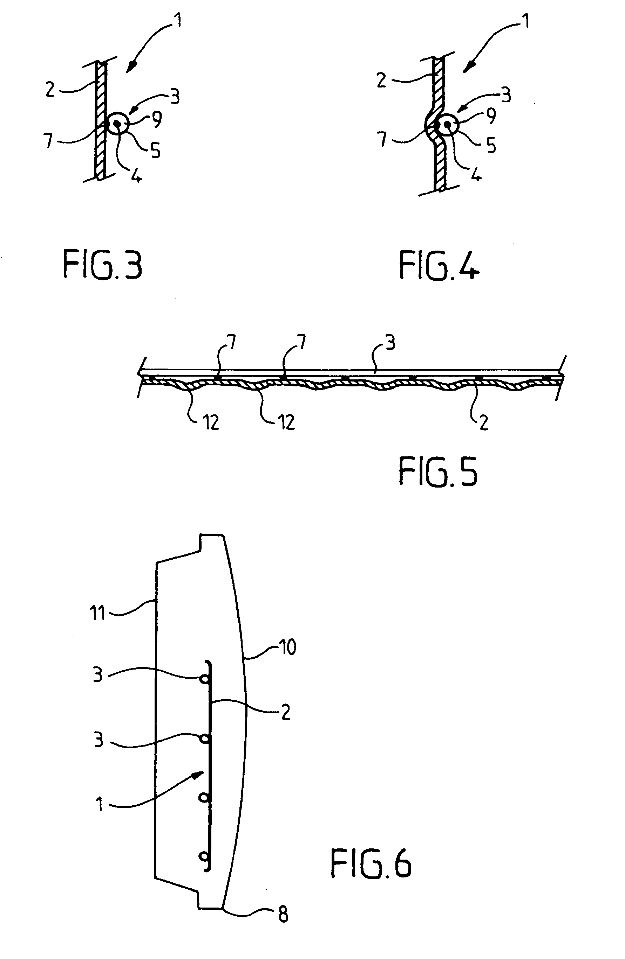

La figure 2 montre que la résistance électrique chauffante 3 est plaquée contre la surface du diffuseur 2, comme visible sur les figures 3 et 4 ; la fixation de la résistance chauffante 3 peut avoir lieu sur un diffuseur 2 plan (figure 3), ou sur un diffuseur 2 muni d'un logement qui épouse une partie de la forme extérieure de la résistance électrique 3 chauffante cylindrique (cf. figure 4).

La résistance électrique 3 chauffante est ici composée d'un filament électrique 4 monté dans une gaine 5 tubulaire cylindrique et entouré d'un matériau isolant diélectrique (magnésie) disposé entre le filament électrique 4 et la gaine 5.

La résistance chauffante 3 est ici fixée à la surface du diffuseur 2 au moyen de soudures, réalisées par fusion mutuelle des métaux (et non par ajout de métal supplémentaire) constituant le diffuseur 2 et la gaine 5 de la résistance chauffante, les zones de soudure 7 étant disposées selon l'une des génératrices de la résistance, et espacées les unes des autres.

Selon une variante, le diffuseur 2 peut être sous la forme d'une plaque ondulée comportant des ondulations approximativement perpendiculaires à l'axe médian des tronçons rectilignes de la résistance chauffante 3, comme représenté sur la vue en coupe de la figure 5. Les zones de soudure 7 sont alors ménagées au niveau de renflements des ondulations les plus proches de la résistance. Entre ces zones de soudure 7 peut ainsi avoir lieu une dilatation du métal du diffuseur, sans endommager la qualité des soudures. Ces ondulations peuvent être très fines, d'un écartement de l'ordre du millimètre par exemple.

La figure 6 montre la disposition d'un corps de chauffe 1 au sein de l'enveloppe 8 formant l'ensemble de l'appareil de chauffage. Le diffuseur 2 est disposé à proximité de la paroi frontale 10 interne de l'enveloppe 8, dans sa partie inférieure. La résistance chauffante 3 est soudée à la face arrière du diffuseur 2, orientée vers la paroi arrière 11 de l'enveloppe 8.

A titre d'exemple, pour un corps de chauffe 1 de 500 mm par 300 mm :
- la résistance électrique chauffante 3 est une gaine tubulaire en acier d'un diamètre de 8 mm ;
- les zones de soudure 7 sont espacées de 20 mm à 60 mm ;
- le diffuseur 2 est constitué d'une plaque d'acier, d'une épaisseur de 0,5 à 1 mm.

A titre d'exemple, pour un panneau rayonnant d'une puissance de 1000 W, la hauteur de la plaque du diffuseur est de 245 mm pour une longueur de 460 mm. La résistance électrique présente trois coudes, définissant quatre segments rectilignes uniques parallèles espacés d'environ 70 mm.

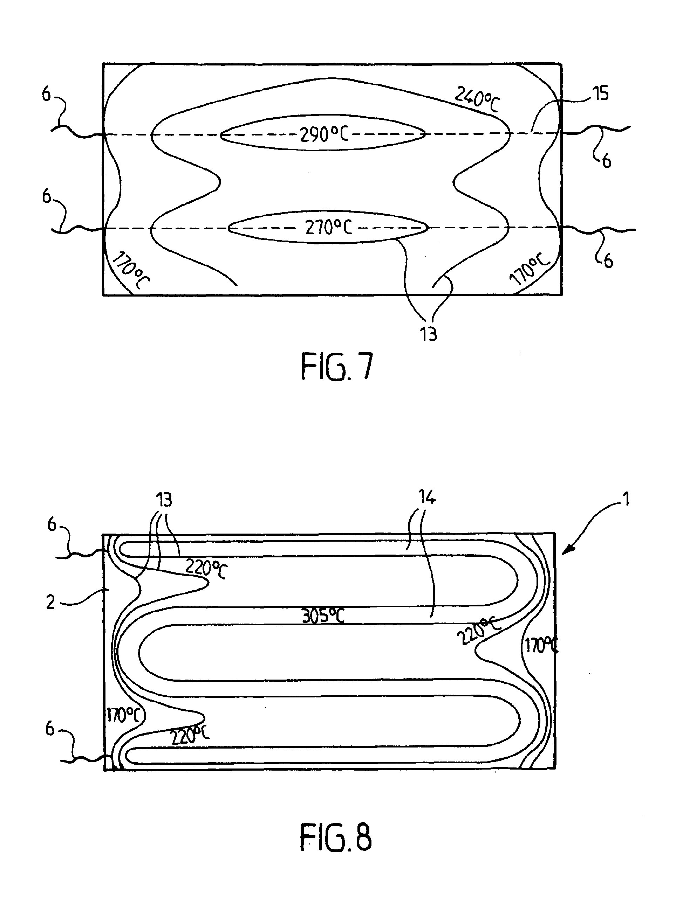

Comme le montrent les résultats des tests thermiques présentés sous forme d'isothermes 13 sur les figures 7 et 8, une telle configuration permet d'obtenir une température du corps de chauffe 1 relativement semblable (figure 8) à celle obtenue avec un corps de chauffe en aluminium extrudé à deux fils résistifs 15 (représentés en pointillés) selon l'art antérieur (figure 7). La température maximale atteinte ici avec le corps de chauffe selon l'invention est d'environ 305° C, le long des isothermes qui suivent le trajet 14 de la résistance électrique 3 soudée.

La disposition de la résistance électrique 3 ainsi coudée, facilite en outre le raccordement à l'alimentation électrique, les connexions 6 se situant du même côté du corps de chauffe 1 (cf. côté gauche sur la figure 1).

Il est donc possible, avec un corps de chauffe mettant en oeuvre un métal à plus faible conductivité thermique (ici acier ∼ 46 W/m.K) et non extrudable d'obtenir des performances thermiques comparables à celles d'un corps de chauffe en aluminium extrudé (conductivité thermique 237 W/m.K) à un coût nettement réduit et avec une grande facilité de mise en oeuvre.

Selon une autre variante de l'invention, le diffuseur de forme sensiblement plane comporte des séries de bossages 20 réalisés par emboutissages ponctuels de la plaque formant le diffuseur. Ces bossages sont écartés tous les 20 à 60 mm environ.

La dimension de ces bossages est la suivante :
- longueur environ 1 à 10 mm
- largeur entre 1 et 2 mm environ
- profondeur de l'emboutis comprise entre 0,2 et 2 mm environ.

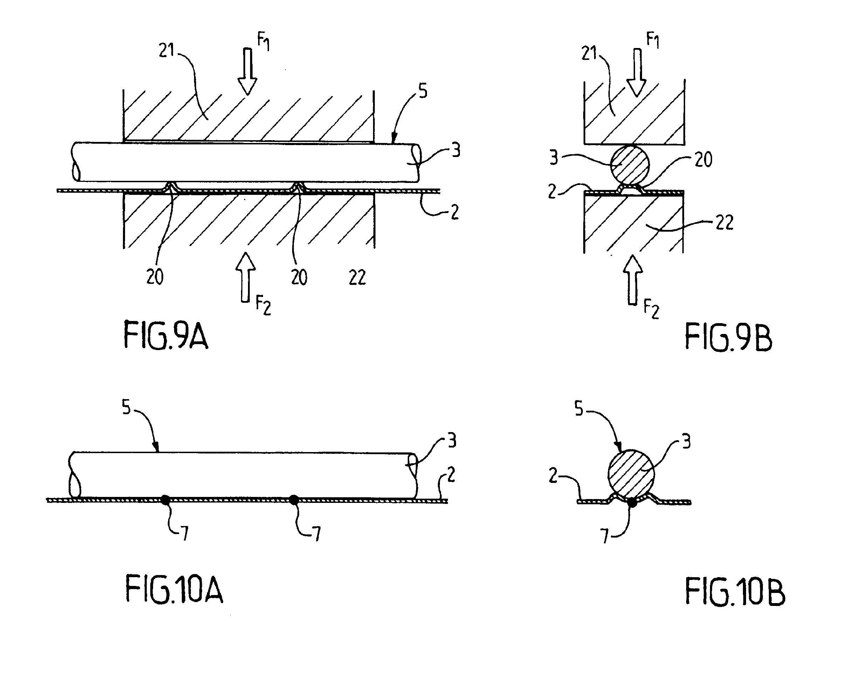

Comme présenté sur les figures 9A et 9B, avant la soudure, la gaine de la résistance électrique 3 n'est en contact avec le diffuseur 2 qu'au niveau des bossages 20. Les électrodes 21 et 22 situées de part et d'autre de l'ensemble diffuseur/résistance électrique permettent le passage du courant uniquement au niveau des zones de contact entre la gaine et le diffuseur 2, c'est-à-dire exclusivement au niveau des bossages 20 créant ainsi des zones de soudure précises et localisées.

Il est ainsi possible d'utiliser une paire d'électrodes de grande longueur disposées en vis-à-vis permettant de réaliser plusieurs soudures simultanément. Cette flexibilité à la fois dans le positionnement des électrodes et dans la multiplicité des zones de soudure réalisées permet un gain de temps appréciable lors de la fabrication.

Pendant la soudure, les bossages 20 sont écrasés lors du rapprochement des deux électrodes 21 et 22 l'une de l'autre selon les flèches F1 et F2. Ces aplatissements des bossages permettent à la gaine 5 de la résistance 3 d'être, après soudure, en contact linéique avec la surface plane du diffuseur 2 (voir les figures 10A et 10B).

## Revendications

1. Corps de chauffe (1) pour appareil de chauffage électrique de locaux, du type comportant au moins une résistance électrique (3) chauffante constituée d'une gaine (5) métallique, incorporant un fil métallique (4) bobiné, noyé dans un isolant (9) diélectrique, la résistance électrique étant fixée par soudure de la gaine (5) métallique sur la surface d'au moins une des faces d'un diffuseur (2) métallique se présentant sensiblement sous la forme d'une plaque,
**caractérisé en ce que** le diffuseur et la gaine de la résistance chauffante sont en acier et sont soudés l'un à l'autre par fusion mutuelle des métaux les constituant au niveau de la zone de soudure (7), **sans ajout de métal supplémentaire,**
**la surface du diffuseur présentant, avant soudure, des bossages (20), la gaine de la résistance électrique (3) étant soudée au diffuseur (2) exclusivement au niveau desdits bossages (20).**

2. Corps de chauffe (1) selon la revendication 1, **caractérisé en ce qu'**il comporte une résistance électrique (3) chauffante unique.

3. Corps de chauffe selon la revendication 1 ou 2, **caractérisé en ce que** la résistance électrique (3) chauffante est formée d'un seul tronçon rectiligne ou de plusieurs tronçons rectilignes reliés par au moins un tronçon courbe.

4. Corps de chauffe selon l'une quelconque des revendications précédentes, **caractérisé en ce que** le diffuseur (2) est une plaque métallique de forme générale plane.

5. Corps de chauffe selon **la revendication** 3, **caractérisé en ce que** le diffuseur (2) est sous la forme d'une plaque métallique ondulée présentant des ondulations (12) sensiblement perpendiculaires au(x) tronçon(s) rectiligne(s) de la résistance électrique.

6. Corps de chauffe selon la revendication 5, **caractérisé en ce que** les ondulations (12) sont situées entre les zones de soudure (7).

7. Corps de chauffe selon l'une quelconque des revendications précédentes, **caractérisé en ce que** le diffuseur (2) est muni d'au moins un logement externe qui épouse au moins partiellement la forme de la résistance électrique (3) chauffante.

8. Procédé de réalisation d'un corps de chauffe (1) pour appareil de chauffage électrique de locaux selon l'une quelconque des revendications **précédentes** par soudure d'une résistance électrique (3) chauffante sur un diffuseur (2), **caractérisé en ce qu'**il comprend les étapes successives suivantes :
- réalisation de bossages (20) à la surface d'au moins une face du diffuseur (2),
- mise en place de la résistance électrique (3) chauffante, au contact du diffuseur uniquement au niveau des bossages (20),
- positionnement d'au moins une paire d'électrodes (21, 22) de soudure de part et d'autre de l'ensemble constitué par le diffuseur et la résistance électrique chauffante,
- application d'une tension électrique entre les deux électrodes (21, 22), et d'une pression dans le sens d'un rapprochement des électrodes induisant un écrasement des bossages (20) lors de la fusion mutuelle des métaux constitutifs du diffuseur (2) et de la gaine (5) de la résistance électrique (3).

9. Appareil de chauffage électrique de locaux, **caractérisé en ce qu'**il comprend une enveloppe (8) incorporant un corps de chauffe (1) selon l'une quelconque des revendications **1 à 8.**

10. Appareil de chauffage électrique de locaux selon la revendication **9, caractérisé en ce que** le diffuseur (2) du corps de chauffe (1) est disposé à proximité de la paroi frontale (10) interne de ladite enveloppe et la face du diffuseur (2) opposée à celle recevant la résistance électrique (3) par soudure étant orientée en direction de ladite paroi frontale (10) de l'enveloppe (8).

11. Appareil de chauffage selon la revendication **10, caractérisé en ce qu'**il constitue un panneau rayonnant, la face du diffuseur (2) orientée vers la paroi frontale (10) de l'enveloppe étant recouverte d'un revêtement, de type peinture, augmentant l'émissivité de la surface de rayonnement dudit diffuseur (2).

12. Appareil de chauffage selon les revendications **9 ou 10, caractérisé en ce que** ledit appareil est un convecteur, un panneau rayonnant, un radiateur ou un sèche-serviettes.

## Patentansprüche

1. Heizkörper (1) für ein elektrisches Heizgerät für Räume der Bauart, die mindestens einen elektrischen Heizwiderstand (3) aufweist, der von einer metallischen Hülle (5) gebildet wird, die einen gewickelten Metalldraht (4) einschließt, der in einen dielektrischen Isolator (9) eingelassen ist, wobei der elektrische Widerstand durch Schweißen auf der metallischen Hülle (5) auf der Oberfläche mindestens einer der Flächen eines metallischen Diffusors (2) befestigt ist, die sich etwa in Form einer Platte darstellt, **dadurch gekennzeichnet, dass** der Diffusor und die Hülle des Heizwiderstands aus Stahl sind und durch gegenseitiges Verschmelzen der Metalle, die sie bilden, in der Schmelzzone (7) ohne Hinzufügen von zusätzlichem Metall aufeinander verschweißt sind, wobei die Oberfläche des Diffusors vor dem Schweißen Wülste (20) aufweist, wobei die Hülle des elektrischen Widerstands (3) auf dem Diffusor (2) ausschließlich im Bereich der Wülste (20) verschweißt ist.

2. Heizkörper (1) nach Anspruch 1, **dadurch gekennzeichnet, dass** er einen einzigen elektrischen Heizwiderstand (3) aufweist.

3. Heizkörper nach Anspruch 1 oder 2, **dadurch gekennzeichnet, dass** der elektrische Heizwiderstand (3) von einem einzigen geraden Abschnitt oder von mehreren geraden Abschnitten gebildet wird, die durch mindestens einen gekrümmten Abschnitt verbunden sind.

4. Heizkörper nach einem der vorangehenden Ansprüche, **dadurch gekennzeichnet, dass** der Diffusor (2) eine allgemein ebene Metallplatte ist.

5. Heizkörper nach Anspruch 3, **dadurch gekennzeichnet, dass** der Diffusor (2) eine gewellte Metallplatte ist, die zu dem/den geraden Abschnitt/en des elektrischen Widerstands etwa lotrechte Wellen (12) aufweist.

6. Heizkörper nach Anspruch 5, **dadurch gekennzeichnet, dass** sich die Wellen (12) zwischen den Schweißzonen (7) befinden.

7. Heizkörper nach einem der vorangehenden Ansprüche, **dadurch gekennzeichnet, dass** der Diffusor (2) mit mindestens einer externen Aufnahme ausgestattet ist, die mindestens teilweise die Form des elektrischen Heizwiderstands (3) annimmt.

8. Herstellungsverfahren eines Heizkörpers (1) für ein elektrisches Heizgerät für Räume nach einem der vorangehenden Ansprüche durch Verschweißen eines elektrischen Heizwiderstands (3) auf einem Diffusor (2), **dadurch gekennzeichnet, dass** es die folgenden aufeinanderfolgenden Schritte umfasst:
- Herstellen von Wülsten (20) auf der Oberfläche mindestens einer Fläche des Diffusors (2),
- Platzieren des elektrischen Heizwiderstands(3) im Kontakt mit dem Diffusor ausschließlich im Bereich der Wülste (20),
- Positionieren von mindestens einem Paar Schweißelektroden (21, 22) auf der einen und der anderen Seite der Gruppe, die von dem Diffusor und dem elektrischen Heizwiderstand gebildet wird,
- Anlegen einer elektrischen Spannung zwischen den zwei Elektroden (21, 22) und Ausüben eines Drucks in Richtung einer Annäherung der Elektroden, wobei es bei der gegenseitigen Verschmelzung der Metalle, die den Diffusor (2) und die Hülle (5) des elektrischen Widerstands (3) bilden, zu einem Zusammendrücken der Wülste (20) kommt.

9. Elektrisches Heizgerät für Räume, **dadurch gekennzeichnet, dass** es einen Mantel (8) umfasst, der einen Heizkörper (1) nach einem der Ansprüche 1 bis 8 einschließt.

10. Elektrisches Heizgerät für Räume nach Anspruch 9, **dadurch gekennzeichnet, dass** der Diffusor (2) des Heizkörpers (1) in der Nähe der inneren vorderen Wand (10) des Mantels angeordnet ist und die Fläche des Diffusors (2), die dieser gegenüberliegt, auf dem der elektrische Widerstand (3) verschweißt ist, in Richtung der vorderen Wand (10) des Mantels (8) zeigt.

11. Heizgerät nach Anspruch 10, **dadurch gekennzeichnet, dass** er eine strahlende Platte bildet, wobei die Fläche des Diffusors (2), die zur vorderen Wand (10) des Mantels zeigt, mit einem Überzug vom Typ Anstrich bedeckt ist, der der Emissionsvermögen der strahlenden Oberfläche des Diffusors (2) erhöht.

12. Heizgerät nach den Ansprüchen 9 oder 10, **dadurch gekennzeichnet, dass** das Gerät ein Konvektor, eine strahlende Platte, ein Radiator oder ein Handtuchtrockner ist.

## Claims

1. A heating element (1) for an electric heating appliance for premises, of the type including at least one electric heating resistance (3) made up of a metal sheath (5), incorporating a wound metal wire (4), embedded in a dielectric insulator (9), the electric resistance being fastened by welding of the metal sheath (5) on the surface of at least one of the faces of a metallic diffuser substantially in the shape of a plate,
**characterized in that** the diffuser and the sheath of the heating resistance are made from steel and are welded to one another by mutual fusion of the metals from which they are made up at the weld zone (7), without adding additional material,
the surface of the diffuser having bosses (20) before welding, the sheath of the electrical resistance (3) being welded to the diffuser (2) exclusively at said bosses (20).

2. The heating element (1) according to claim 1, **characterized in that** it includes a single electric heating resistance (3).

3. The heating element according to claim 1 or 2, **characterized in that** the electric heating resistance (3) is formed from a single rectilinear segment or several rectilinear segments connected by at least one curved segment.

4. The heating element according to any one of the preceding claims, **characterized in that** the diffuser (2) is a metal plate with a generally planar shape.

5. The heating element according to claim 3, **characterized in that** the diffuser (2) is in the form of a corrugated metal plate having corrugations (12) substantially perpendicular to the rectilinear segment(s) of the electric resistance.

6. The heating element according to claim 5, **characterized in that** the corrugations (12) are situated between the weld zones (7).

7. The heating element according to any one of the preceding claims, **characterized in that** the diffuser (2) is provided with at least one outer housing that at least partially hugs the shape of the electric heating resistance (3).

8. A method for manufacturing a heating element (1) for an electric heating apparatus for premises according to any one of the preceding claims by welding an electric heating resistance (3) on a diffuser (2), **characterized in that** it comprises the following successive steps:
- producing bosses (20) on the surface of at least one face of the diffuser (2),
- placing the electric heating resistance (3) in contact with the diffuser only at the bosses (20),
- positioning at least one pair of welding electrodes (21, 22) on either side of the assembly made up of the diffuser and the electric heating resistance,
- applying an electric voltage between the two electrodes (21, 22), and pressure in the direction bringing the electrodes closer together causing crushing of the bosses (20) during the mutual fusion of the metals making up the diffuser (2) and the sheath (5) of the electric resistance (3).

9. An electric heating apparatus for premises, **characterized in that** it comprises an enclosure (8) incorporating a heating element (1) according to any one of claims 1 to 8.

10. The electric heating apparatus for premises according to claim 9, **characterized in that** the diffuser (2) of the heating element (1) is positioned near the inner front wall (10) of said enclosure, and the face of the diffuser (2) opposite that receiving the electric resistance (3) by welding being oriented toward said front wall (10) of the enclosure (8).

11. The heating apparatus according to claim 10, **characterized in that** it constitutes a radiating panel, the face of the diffuser (2) oriented toward the front wall (10) of the enclosure being covered with a coating, of the paint type, increasing the emissivity of the radiation surface of said diffuser (2).

12. The heating apparatus according to claim 9 or 10, **characterized in that** said apparatus is a conductor, a panel heater, a radiator or a towel warmer.
